# EUROPÄISCHE PATENTSCHRIFT

(11) **EP 2 531 767 B1**
(45) Veröffentlichungstag und Bekanntmachung des Hinweises auf die Patenterteilung: **11.03.2015**
(21) Anmeldenummer: 11701649.3
(22) Anmeldetag: 20.01.2011
(51) Int. Cl.: G01D 11/30

(54) **FLUIDLEITUNGSELEMENT**
FLUID CONDUIT ELEMENT
ELÉMENT DE CONDUITE DE FLUIDE

(30) Priorität: 04.02.2010 DE 102010006766
(43) Veröffentlichungstag der Anmeldung: 12.12.2012
(73) Patentinhaber: A. RAYMOND et Cie, 38000 Grenoble (FR)
(72) Erfinder: KURTH, Martin, 79400 Kandern (DE); LAUX, Oliver, 79541 Lörrach (DE); FRÄULIN, Christian, 79183 Waldkirch (DE)
(74) Vertreter: RACKETTE Partnerschaft Patentanwälte
(86) Internationale Anmeldenummer: PCT/EP2011/050790
(87) Internationale Veröffentlichungsnummer: WO 2011/095401

(56) Entgegenhaltungen:
- EP-A2- 1 930 710
- DE-A1- 19 834 212
- DE-U1-202006 016 186
- US-A- 6 003 381
- US-A1- 2005 193 809
- US-A1- 2007 212 912

## Beschreibung

Die Erfindung betrifft ein Fluidleitungselement gemäß dem Oberbegriff des Patentanspruches 1.

Ein derartiges Fluidleitungselement ist aus EP 1930710 A2 bekannt. Das vorbekannte Fluidleitungselement verfügt über einen Durchflusskörper, der einen Durchgangskanal aufweist und an dem eine gehäuseförmige Messeinrichtungsaufnahme angebracht ist. Die Messeinrichtungsaufnahme verfügt über ein topfartiges Gehäuseteil, das einstückig mit dem Durchflusskörper verbunden ist, und über ein Deckelteil, das das Gehäuseteil abschließt. In dem Gehäuseteil ist eine Messeinrichtung angeordnet, die über eine Sensoreinheit verfügt, mit der wenigstens ein einem durch den Durchgangskanal durchströmenden Fluid zugeordneter Messwert messbar ist. Hierfür ist zwischen dem Durchgangskanal und dem Gehäuseteil eine Durchströmöffnung vorhanden, durch die durch den Durchflusskanal durchströmendes Fluid in das Gehäuseteil eintreten kann.

Der Erfindung liegt die Aufgabe zugrunde, ein Fluidleitungselement der eingangs genannten Art zu schaffen, das verhältnismäßig einfach und zuverlässig zusammenzubauen ist.

Diese Aufgabe wird bei einem Fluidleitungselement der eingangs genannten Art erfindungsgemäß mit den kennzeichnenden Merkmalen des Patentanspruches 1 gelöst.

Dadurch, dass eine Einsatzhülse vorhanden ist, die in einer in einer Trägerplatte der Messeinrichtungsaufnahme ausgebildeten Aufnahmeausnehmung über die Dichteinheit fluiddicht angeordnet ist und wobei die Einsatzhülse dicht mit der Sensoreinheit verbunden ist, ergibt sich ein sehr einfach und betriebssicher zu bewerkstelligender Zusammenbau des Fluidleitungselementes, da großflächige Abdichtungen vermieden sind. Das mit der Sensoreinheit zu vermessende Fluid gelangt vielmehr direkt von dem Durchgangskanal über den Probenkanal zu der Sensoreinheit, ohne dass größere Volumina mit dem Fluid gefüllt und dementsprechend abgedichtet werden müssen.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer Seitenansicht ein einen Steckeranschluss und einen Schlauchanschluss aufweisendes Ausführungsbeispiel eines erfindungsgemäßen Fluidleitungselementes,
- Fig. 2: in einer perspektivischen Ansicht einen Durchflusskörper des Fluidleitungselementes gemäß Fig. 1 mit einer Trägerplatte, die einstückig an dem Durchflusskörper angeformt ist,
- Fig. 3.: in einem Längsschnitt das Ausführungsbeispiel gemäß Fig. 1,
- Fig. 4: in einer Seitenansicht eine Ausführung einer Einsatzhülse für ein erfindungsgemäßes Fluidleitungselement,
- Fig. 5: In einer detaillierten Schnittansicht das Ausführungsbeispiel gemäß Fig. 1 bis Fig. 4 im Bereich der Einsteckhülse,
- Fig. 6: in einer detaillierten Schnittansicht ein weiteres Ausführungsbeispiel eines erfindungsgemäßen Fluidleitungselementes, bei dem ein Kappenabschnitt über eine Rastverbindung mit einem Trägersockel verbunden ist, und
- Fig. 7: in einer perspektivischen Ansicht ein weiteres Ausführungsbeispiel eines Durchflusskörpers für ein erfindungsgemäßes Fluidleitungselement.

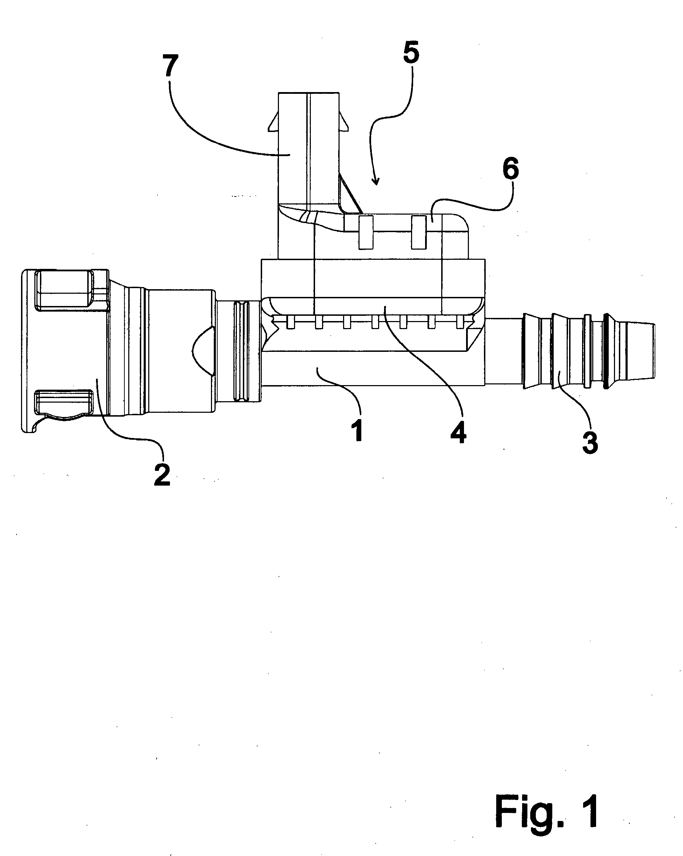

Fig. 1 zeigt in einer perspektivischen Ansicht ein Ausführungsbeispiel eines erfindungsgemäßen Fluidleitungselementes, das über einen länglichen Durchflusskörper 1 verfügt. Bei dem Ausführungsbeispiel gemäß Fig. 1 ist an dem Durchflusskörper 1 zum einen ein Steckeranschluss 2 und zum anderen ein Schlauchanschluss 3 ausgebildet, um das Fluidleitungselement in ein in Fig. 1 nicht dargestelltes Fluidleitungssystem zu integrieren. Der Steckeranschluss 2 dient dazu, ein in Fig. 1 nicht dargestelltes Einsteckteil fluiddicht und verrastend mit dem Durchflusskörper 1 zu verbinden, während der Schlauchanschluss 3 dazu ausgebildet ist, in einen in Fig. 1 nicht dargestellten Schlauch des Fluidleitungssystems eingefügt zu werden.

Zwischen dem Steckeranschluss 2 und dem Schlauchanschluss 3 weist das Fluidleitungselement einen Trägersockel 4 als ein Element einer Messeinrichtungsaufnahme auf, der einstückig mit dem Durchflusskörper 1 ausgebildet ist. Weiterhin verfügt das erfindungsgemäße Fluidleitungselement über ein Aufsatzteil 5 als weiteres Element einer Messeinrichtungsaufnahme, das einen in den Trägersockel 4 eingefügten Kappenabschnitt 6 und einen an den Kappenabschnitt 6 angeformten Anschlussabschnitt 7 aufweist, der sich in etwa rechtwinklig zu dem Durchflusskörper 1 weg erstreckt.

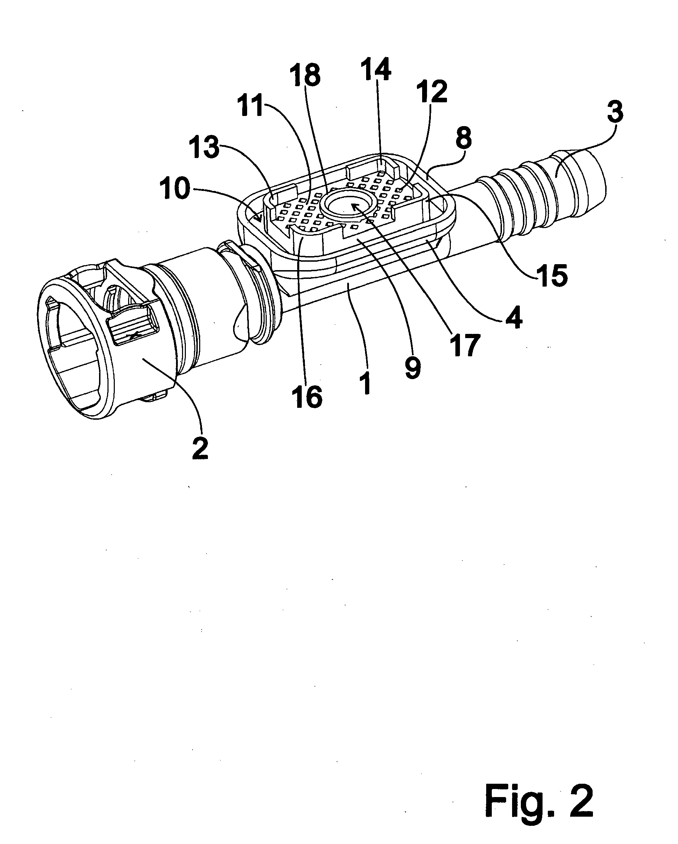

Fig. 2 zeigt in einer perspektivischen Ansicht den Durchflusskörper 1 des Ausführungsbeispieles gemäß Fig. 1 mit Blick auf die dem Durchflusskörper 1 abgewandte Deckseite des Trägersockels 4. Aus Fig. 2 ist ersichtlich, dass der Trägersockel 4 über eine außenseitig umlaufende Außenwand 8 und über eine in einem Abstand von der Außenwand 8 umlaufende Innenwand 9 verfügt, wobei zwischen der Außenwand 8 und der Innenwand 9 eine umlaufende Aufnahmenut 10 ausgebildet ist.

Die Innenwand 9 umschließt eine in etwa rechteckförmige flache Trägerplatte 11, die aus fertigungstechnischen Gründen eine Anzahl von sich in Richtung des Durchflusskörpers 1 erstreckende, als Sacklöcher ausgebildete dienende Perforationen 12 aufweist. In Eckbereichen der Trägerplatte 11 sind L-förmige Abstützstege 13, 14, 15, 16 ausgebildet, die sich auf der dem Durchflusskörper 1 wegweisenden Seite von der Trägerplatte 11 weg erstrecken. In der Mitte der Trägerplatte 11 ist eine Aufnahmeausnehmung 17 vorhanden, die von einer geringfügig über die Trägerplatte 11 überstehenden Ringwulst 18 umschlossen ist.

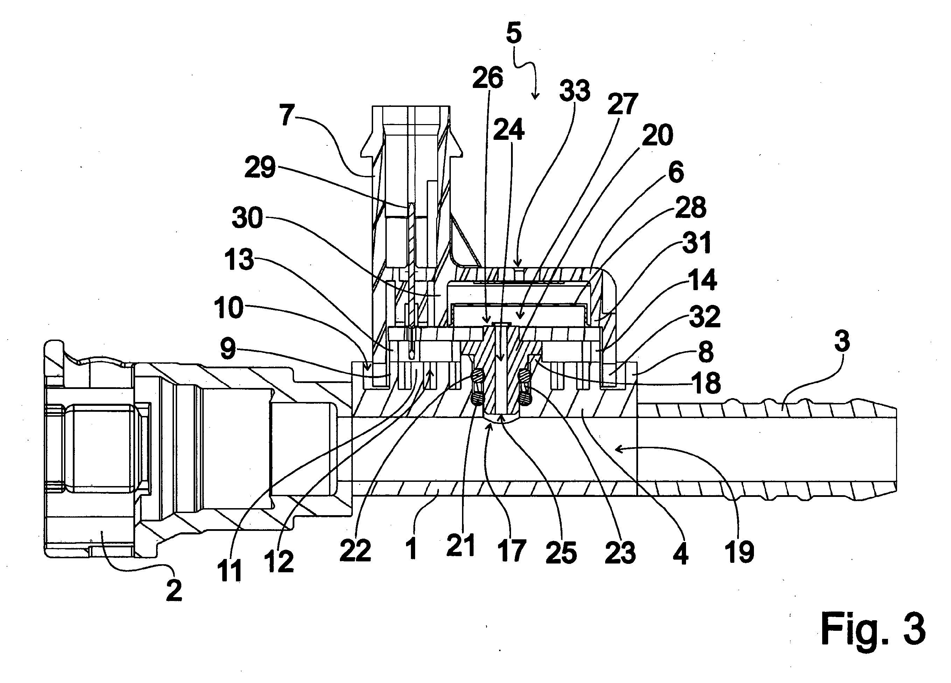

Fig. 3 zeigt in einem Längsschnitt das Ausführungsbeispiel gemäß Fig. 1 und Fig. 2 in der Anordnung gemäß Fig. 1. Aus Fig. 3 ist ersichtlich, dass sich durch den Durchflusskörper 1 ein Durchflusskanal 19 erstreckt, durch den ein in der Darstellung gemäß Fig. 3 nicht dargestellten Fluidleitungssystem strömendes Fluid durchströmen kann. Die Aufnahmeausnehmung 17 erstreckt sich durch die Trägerplatte 11, wobei in der Aufnahmeausnehmung 17 eine Einsatzhülse 20 angeordnet ist, die über eine in dem Ausführungsbeispiel gemäß Fig. 1 bis Fig. 3 durch zwei Dichtungsringe 21, 22 und durch einen zwischen den Dichtungsringen 21, 22 angeordneten Zwischenring 23 gebildete Dichteinheit fluiddicht in der Aufnahmeausnehmung 17 angeordnet ist. Die Einsatzhülse 20 verfügt über einen durchgehenden Probenkanal 24, der an einem Fluidende 25 der Einsatzhülse 20 in den Durchflusskanal 19 mündet.

An einem dem Fluidende 25 der Einsatzhülse 20 gegenüber liegenden Sensorende 26 der Einsatzhülse 20 liegt als ein Element einer Messeinrichtung eine Sensoreinheit 27 fluiddicht auf, die weiterhin randseitig auf den Abstützstegen 13, 14, 15, 16 aufliegt. Die Sensoreinheit 27 verfügt über wenigstens einen Sensor, mit dem ein durch den Durchflusskanal 19 durchströmendes und in den Probenkanal 24 eintretendes Fluid mit wenigstens einem ihm zugeordneten Messwert wie beispielsweise Druck, Temperatur, elektrische Leitfähigkeit oder anderer Charakteristika vermessbar ist.

Die Sensoreinheit 27 ist auf ihrer dem Trägersockel 4 abgewandten Seite in einem gegenüber äußeren Umwelteinflüssen verhältnismäßig empfindlichen Bereich durch eine Schutzhaube 28 abgedeckt, während in einem frei liegenden Bereich eine Anzahl von Kontaktstiften 29 vorhanden sind, die mit der Sensoreinheit 27 mechanisch und elektrisch verbunden sind, in den Anschlussabschnitt 7 hineinragen und mit einem in Fig. 3 nicht dargestellten Stecker zum Verschalten der Sensoreinheit 27 mit einer in Fig. 3 nicht dargestellten Detektionseinrichtung verbindbar sind.

Der Kappenabschnitt 6 des Aufsatzteiles 5 verfügt über in Richtung der Sensoreinheit 27 ragende Widerlagerstege 30, 31, die bei bestimmungsgemäßer Anordnung des Aufsatzteiles 5 auf dem Trägersockel 4 auf der Sensoreinheit 27 aufliegen und diese fixieren. In dieser bestimmungsgemäßen Anordnung des Aufsatzteiles 5 greift eine umlaufende Eintauchwand 32 in die Aufnahmenut 10 ein, so dass bei dem Ausführungsbeispiel gemäß Fig. 3 bei Verfüllen des dann in der Aufnahmenut 10 befindlichen freien Volumens mit einer Klebstoffmasse das Aufsatzteil 5 fest mit dem Trägersockel 4 verbunden ist.

Die Höhe der Eintauchwand 32 ist so bemessen, daß diese nach der Montage des Aufsatzteils 5 den Grund der Aufnahmenut 10 nicht berührt. Damit ist sichergestellt, dass eine spielfrei und spaltfreie Aufnahme der Sensoreinheit 27 zwischen den Widerlagerstegen 30, 31 und den Abstützstegen 13, 14, 15, 16 gegeben ist. Dadurch werden Beschädigungen an der Sensoreinheit 27 sowie an den Verbindungen der Kontaktstifte 29, die fest mit der Sensoreinheit 27 verbunden sind, durch Schwingungsbeanspruchung vermieden.

Das von dem Aufsatzteil 5 umschlossene Volumen steht dabei mit der äußeren Umgebung über eine in dem Kappenabschnitt 6 ausgebildete Ausgleichsausnehmung 33 in Verbindung, um insbesondere einen Druckausgleich zwischen dem von den Widerlagerstegen 30, 31 und der Deckseite des Kappenabschnitt 6 umschlossenen Volumen und der äußeren Umgebung zu bewerkstelligen.

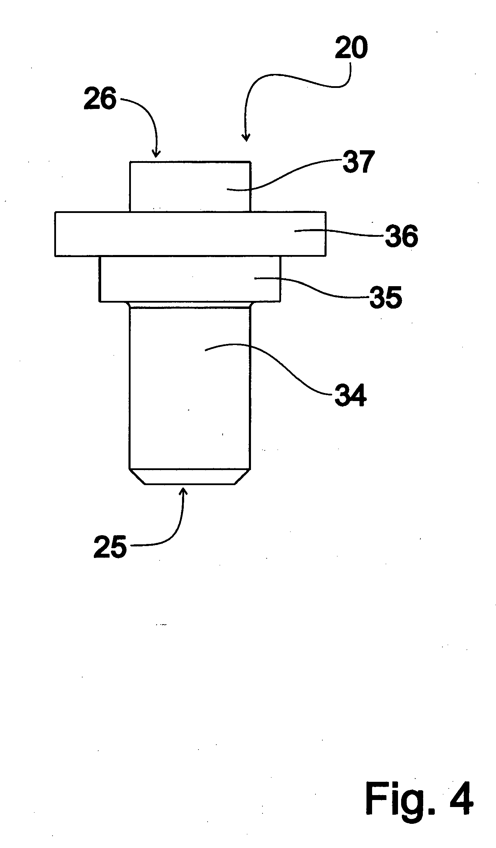

Fig. 4 zeigt in einer Seitenansicht die Einsatzhülse 20 bei dem Ausführungsbeispiel gemäß Fig. 3. Die Einsatzhülse 20 ist mit einem im Wesentlichen zylinderförmig ausgebildeten Eintauchabschnitt 34 ausgebildet, der sich von dem Fluidende 25 in Richtung des Sensorendes 26 erstreckt. Auf der dem Fluidende 25 abgewandten Seite des Eintauchabschnittes 34 ist ein im Durchmesser gegenüber dem Eintauchabschnitt 34 vergrößerter Zwischenring 35 angesetzt, der ein Widerlager in Gestalt einer Andruckstufe für die in Fig. 3 nicht dargestellte Dichteinheit bildet, während das andere Widerlager als Anschlagstufe in der Aufnahmeausnehmung 17 ausgebildet ist.

Auf der dem Fluidende 25 abgewandten Seite des Zwischenringes 35 verfügt die Einsatzhülse 20 über einen Auflageteller 36, der im Durchmesser gegenüber dem Zwischenring 35 vergrößert ist und der bei bestimmungsgemäßer Anordnung der Einsatzhülse 20 auf der Ringwulst 18 aufliegt. Schließlich verfügt die Einsatzhülse 20 auf der dem Fluidende 25 abgewandten Seite des Auflagetellers 36 über einen Sensorabschnitt 37, der im Durchmesser gegenüber dem Auflageteller 36 kleiner und insbesondere gleich wie der Eintauchabschnitt 34 ausgebildet ist. Durch eine derartige Ausgestaltung der Einsatzhülse 20 ergibt sich eine verhältnismäßig einfach zu bewerkstelligende Verbindung der Sensoreinheit 27 mit einem in dem Durchflusskanal 19 strömenden Fluid.

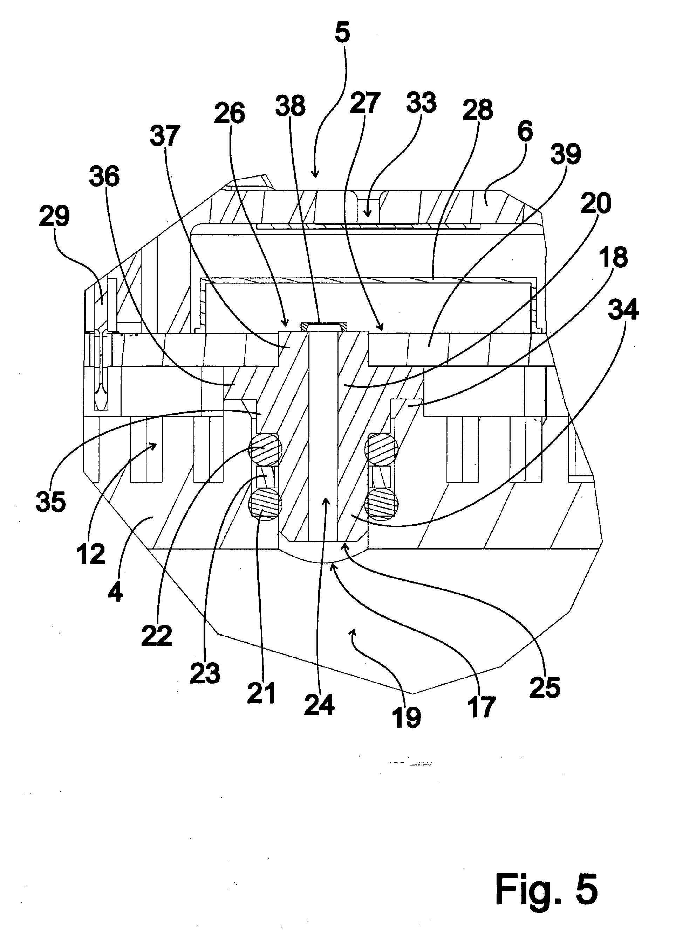

Fig. 5 stellt in einer detaillierten Schnittansicht das Ausführungsbeispiel gemäß Fig. 1 bis Fig. 4 im Bereich der Einsatzhülse 20 dar. Aus Fig. 5 ist ersichtlich, dass die Dichtungsringe 21, 22 den Eintauchabschnitt 34 der Einsatzhülse 20 umschließen und gegen den Trägersockel 4 abdichten. Weiterhin lässt sich Fig. 5 entnehmen, dass im Bereich des Sensorendes 26 ein Sensorchip 38 der Sensoreinheit 27 vorhanden ist, der den Probenkanal 24 fluiddicht abschließt. Der Sensorchip 38 ist elektrisch mit einer von der Einsatzhülse 20 mit ihrem Sensorabschnitt 37 durchbrochenen Leiterplatte 39 der Sensoreinheit 27 verbunden und beispielsweise als ein Drucksensor ausgeführt, um den statischen Druck eines in dem Durchflusskanal 19 strömenden Fluids zu messen.

Auf diese Art und Weise ist es lediglich erforderlich, die Einsatzhülse 20 gegen die Umgebung abzudichten, was den Zusammenbau des erfindungsgemäßen Fluidleitungselementes wesentlich erleichtert und eine hohe Zuverlässigkeit auch unter rauen Betriebsbedingungen sicherstellt

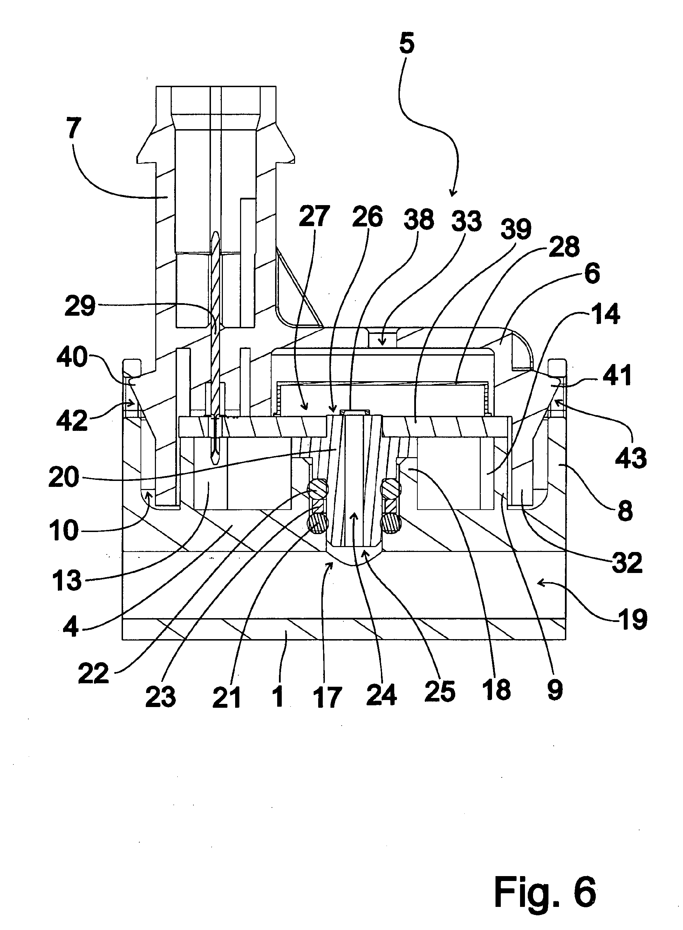

Fig. 6 zeigt in einem detaillierten Längsschnitt ein weiteres Ausführungsbeispiel eines erfindungsgemäßen Fluidleitungselementes, wobei sich dem anhand Fig. 1 bis Fig. 5 erläuterten Ausführungsbeispiel und dem Ausführungsbeispiel gemäß Fig. 6 anhand entsprechender Elemente mit dem gleichen Bezugszeichen versehen und im weiteren nicht näher erläutert sind. Bei dem Ausführungsbeispiel gemäß Fig. 6, das gegenüber dem Ausführungsbeispiel gemäß Fig. 1 bis Fig. 5 einen wesentlich dünneren Trägersockel 4 aufweist, sind an dem Aufsatzteil 5 eine Anzahl von Verriegelungshaken 40, 41 einer Rasteinrichtung ausgebildet, die bei bestimmungsgemäßer Anordnung des Aufsatzteiles 5 auf dem Trägersockel 4 in in der Außenwand 8 des Trägersockels 4 ausgebildeten Verriegelungsausnehmungen 42, 43 der Rasteinrichtung eingreifen und somit das Aufsatzteil 5 alternativ oder ergänzend zu einer Verklebung an dem Trägersockel 4 fixieren.

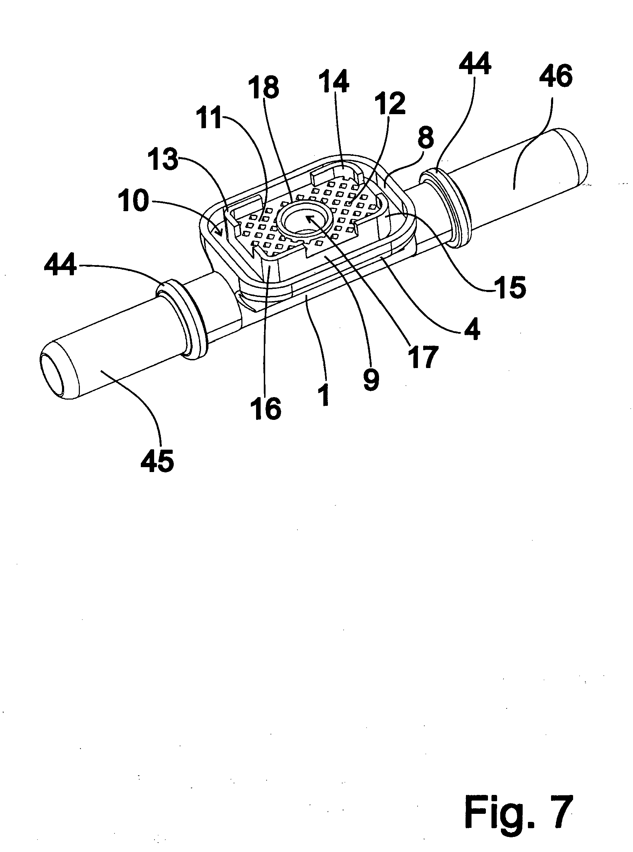

Fig. 7 zeigt in einer perspektivischen Ansicht bei einem weiteren Ausführungsbeispiel eines erfindungsgemäßen Fluidleitungselementes einen Durchflusskörper 1, an dem zum Verbinden mit einem in Fig. 7 nicht dargestellten Fluidleitungssystem an einander gegenüber liegenden Seiten des Durchflusskörpers 1 jeweils ein mit einem umfänglich umlaufenden Ringbund 44 ausgebildetes Einsteckteil 45, 46 vorhanden ist, die in Steckeranschlüsse 2 des Fluidleitungssystems einsteckbar sind. Es versteht sich, dass bei weiteren nicht dargestellten Ausführungsbeispielen von Durchflusskörpern 1 für erfindungsgemäße Fluidleitungselemente an Durchflusskörpern auch ein Steckeranschluss 2 und ein Einsteckteil 45, 46 beziehungsweise ein Schlauchanschluss 3 mit einem Einsteckteil 45, 46 zum Verbinden mit einem Fluidleitungssystem vorhanden sein können.

## Patentansprüche

1. Fluidleitungselement mit einem einen Durchgangskanal (19) aufweisenden Durchflusskörper (1), an dem eine Messeinrichtungsaufnahme angebracht ist, und mit einer in der Messeinrichtungsaufnahme angeordneten Messeinrichtung, die über eine Sensoreinheit (27) verfügt, mit der wenigstens ein einem durch den Durchgangskanal (19) durchströmenden Fluid zugeordneter Messwert messbar ist, wobei die Messeinrichtungsaufnahme eine Trägerplatte (4) aufweist, die über eine Aufnahmeausnehmung (17) verfügt, dass eine einen Probenkanal (24) aufweisende Einsatzhülse (20) vorhanden ist, die in der Aufnahmeausnehmung (17) angeordnet ist und die mit einem Fluidende (25) in den Durchgangskanal (19) mündet, wobei eine Dichteinheit (21, 22, 23) vorhanden ist, mit der die Einsatzhülse (20) gegen die Messeinrichtungsaufnahme abdichtbar ist, und wobei die Sensoreinheit (27) fluiddicht mit einem dem Fluidende (25) abgewandten Sensorende (26) der Einsatzhülse (20) verbunden ist, **dadurch gekennzeichnet, dass** an der Trägerplatte (4) L-förmige Abstützstege (13, 14, 15, 16) ausgebildet sind, auf denen die Sensoreinheit (27) aufliegt, dass die Messeinrichtungsaufnahme mit einer Außenwand (8) sowie mit einer Innenwand (9) ausgebildet ist, die eine Aufnahmenut (10) begrenzen, und über ein Aufsatzteil (5) verfügt, das mit einer Eintauchwand (32) ausgebildet ist, die in die Aufnahmenut (10) eintaucht, dass das Aufsatzteil (5) mit Widerlagerstegen (30, 31) ausgebildet ist, die auf der Sensoreinheit (27) aufliegen und dass das Aufsatzteil (5) über eine eine Anzahl von Verriegelungshaken (40, 41) aufweisende Rasteinrichtung mit dem Durchflusskörper (1) verbunden ist.

2. Fluidleitungselement nach Anspruch 1, **dadurch gekennzeichnet, dass** die Dichteinheit (21, 22, 23) zwischen einer in der Aufnahmeausnehmung (17) ausgebildeten Anschlagstufe und einer an der Einsatzhülse (20) ausgebildeten Andruckstufe angeordnet ist.

3. Fluidleitungselement nach Anspruch 2, **dadurch gekennzeichnet, dass** die Dichteinheit zwei Dichtungsringe (21, 22) und einen zwischen den Dichtungsringen (21, 22) angeordneten Zwischenring (23) aufweist.

4. Fluidleitungselement nach einem der Ansprüche 1 bis 3, **dadurch gekennzeichnet, dass** die Sensoreinheit (27) eine Leiterplatte (39) und einen Sensorchip (38) aufweist, wobei die Einsatzhülse (20) durch die Leiterplatte (39) durchgreift und der Sensorchip (38) den Probenkanal (24) im Bereich des Sensorendes (26) fluiddicht abschließt.

5. Fluidleitungselement nach einem der Ansprüche 1 bis 4, **dadurch gekennzeichnet, dass** der Durchflusskörper (1) mit wenigstens einem zur Aufnahme eines Steckerendes eingerichteten Anschlussende (2) einer Fluidleitungskupplung und/oder mit wenigstens einem Schlauchanschluss (3) und/oder mit wenigstens einem Steckerende (45, 46) für eine Fluidleitungskupplung versehen ist.

## Claims

1. Fluid conduit element, having a body for through-flow (1) which has a through-passage (19) and on which is mounted a measuring-device receptacle, and having a measuring device, arranged in the measuring-device receptacle, which has a sensor unit (27) by which at least one measured value associated with a fluid flowing through the through-passage (19) can be measured, the measuring device receptacle having a support platform (4) which has a receiving opening (17), there being an insert sleeve (20), having a sampling passage (24), which is arranged in the receiving opening (17) and which opens into the through-passage (19) at a fluid end (25), there being a sealing unit (21, 22, 23) by which the insert sleeve (20) can be sealed against the measuring-device receptacle, and the sensor unit (27) being connected with a fluid-tight seal to the sensor end (26) of the insert sleeve (20), which is remote from the fluid end (25) thereof, **characterised in that** there are formed on the support platform (4) L-shaped supporting ribs (13, 14, 15, 16) on which the sensor unit (27) rests, **in that** the measuring-device receptacle is formed to have an outer wall (8) and an inner wall (9) which define a receiving groove (10) and has a top-mounted part (5) which is formed to have a descending wall (32) which descends into the receiving groove (10), **in that** the top-mounted part (5) is formed to have walls for abutment (30, 31) which rest on the sensor unit (27), and **in that** the top-mounted part (5) is connected to the body for through-flow (1) by means of a latching arrangement having a plurality of locking noses (40, 41).

2. Fluid conduit element according to claim 1, **characterised in that** the sealing unit (21, 22, 23) is arranged between an abutment step formed in the receiving opening (17) and a pressure-applying step formed on the insert sleeve (20).

3. Fluid conduit element according to claim 2, **characterised in that** the sealing unit has two sealing rings (21, 22) and an intermediate ring (23) arranged between the two sealing rings (21, 22).

4. Fluid conduit element according to one of claims 1 to 3, **characterised in that** the sensor unit (27) has a printed circuit board (39) and a sensor chip (38), the insert sleeve (20) passing through the printed circuit board (39) and the sensor chip (38) closing off the sampling passage (24) in the vicinity of the sensor end (26) with a fluid-tight seal.

5. Fluid conduit element according to one of claims 1 to 4, **characterised in that** the body for through-flow (1) is provided with at least one connecting end (2) of a fluid-conduit coupling, which connecting end (2) is adapted to receive a male end, and/or with at least one tube connection (3) and/or with at least one male end (45, 46) for a fluid-conduit coupling.

## Revendications

1. Elément de conduite de fluide comprenant un module de passage (1) muni d'un canal de passage (19), sur lequel est disposé un logement de montage d'un dispositif de mesure, et comprenant un dispositif de mesure disposé dans le logement de montage de dispositif de mesure, qui est muni d'un détecteur (27), au moyen duquel il est possible de mesurer au moins une valeur de mesure en rapport avec l'écoulement d'un fluide au travers du canal de passage (19), le logement de montage du dispositif de mesure comportant en l'occurrence une plaque de support (4) qui est pourvue d'une ouverture d'insertion (17), avec la présence d'une douille rapportée (20) munie d'un canal d'échantillonnage (24), qui est disposée dans l'ouverture d'insertion (17) et qui débouche par une extrémité de mise en contact avec le fluide (25) dans le canal de passage (19), un agencement d'étanchéité (21, 22, 23) étant en l'occurrence prévu, au moyen duquel il est possible d'assurer l'étanchéité de la douille rapportée (20) vis-à-vis du logement de montage du dispositif de mesure, et le détecteur (27) étant en l'occurrence relié, de manière étanche au fluide, à une extrémité porte-détecteur (26) de la douille rapportée (20), disposée à l'opposé de l'extrémité de mise en contact avec le fluide (25), **caractérisé en ce que** la plaque de support (4) est munie de nervures d'appui en forme de L (13, 14, 15, 16), sur lesquelles le détecteur (27) prend appui, **en ce que** le logement de montage du dispositif de mesure comprend une paroi extérieure (8) ainsi qu'une paroi intérieure (9) qui définissent une gorge de réception (10), et qui comporte une portion formant rehausse (5) qui est munie d'une paroi de pénétration plongeante (32) qui vient s'encastrer dans la gorge de réception (10), **en ce que** la portion formant rehausse (5) est munie de segments de butée (30, 31) qui sont en contact d'appui sur le détecteur (27) et **en ce que** la portion formant rehausse (5) est raccordée au module de passage (1) au moyen d'un agencement de mise en prise d'enca strement muni d'un certain nombre de crochets de verrouillage (40, 41).

2. Elément de conduite de fluide selon la revendication 1, **caractérisé en ce que** l'agencement d'étanchéité (21, 22, 23) est disposé entre un décrochement de butée ménagé dans l'ouverture d'insertion (17) et un gradin de mise en pression d'application prévu sur la douille rapportée (20).

3. Elément de conduite de fluide selon la revendication 2, **caractérisé en ce que** l'agencement d'étanchéité se compose de deux bagues d'étanchéité (21, 22) et d'une bague intermédiaire (23) disposée entre les bagues d'étanchéité (21,22).

4. Elément de conduite de fluide selon l'une des revendications 1 à 3, **caractérisé en ce que** le détecteur (27) comporte une carte à circuit imprimé (39) et une puce de détection (38), la douille rapportée (20) traversant en l'occurrence la carte à circuit imprimé (39) et la puce de détection (38) venant fermer, tout en assurant l'étanchéité au fluide véhiculé, le canal d'échantillonnage (24) dans la zone correspondant à l'extrémité (26) du détecteur.

5. Elément de conduite de fluide selon l'une des revendications 1 à 4, **caractérisé en ce que** le module de passage (1) est muni d'au-moins un élément d'extrémité d'accouplement (2) d'un raccord pour conduite de fluide, agencé pour recevoir un élément d'extrémité d'insertion mâle, et/ou encore d'au-moins un agencement de raccordement pour flexible (3) et/ou encore d'au-moins d'une extrémité d'insertion mâle (45, 46) pour un raccord pour conduite véhiculant un fluide.
